# EUROPÄISCHE PATENTSCHRIFT

(11) **EP 1 672 198 B1**
(45) Veröffentlichungstag und Bekanntmachung des Hinweises auf die Patenterteilung: **25.11.2009**
(21) Anmeldenummer: 04106733.1
(22) Anmeldetag: 20.12.2004
(51) Int. Cl.: F02B 75/06, F02N 5/02, F16F 15/134, F02N 17/08

(54) **Brennkraftmaschine und Verfahren zum kontrollierten Abstellen einer Brennkraftmaschine**
Internal combustion engine and method for controlling the shutdown of an internal combustion engine
Moteur à combustion interne et procédé de contrôle de l'arrêt d'un moteur à combustion interne

(43) Veröffentlichungstag der Anmeldung: 21.06.2006
(73) Patentinhaber: Ford Global Technologies, LLC, A subsidary of Ford Motor Company, Dearborn, MI 48126 (US)
(72) Erfinder: Grieser, Klemens, 40764, Langenfeld (DE); Kramer, Ulrich, 51427, Bergisch Gladbach (DE); Steiner, Bernd, 51467, Bergisch-Gladbach (DE); Stoffels, Harald, 50733 Köln (DE); Sude, Torsten, 50825, Köln (DE)
(74) Vertreter: Drömer, Hans-Carsten

(56) Entgegenhaltungen:
- FR-A- 2 267 897
- FR-A- 2 824 873
- GB-A- 676 850

## Beschreibung

Die Erfindung betrifft ein Verfahren zum kontrollierten Abstellen einer Brennkraftmaschine mit einer Kurbelwelle und einem Schwungrad, das auf der Kurbelwelle angeordnet ist und modular aus mindestens zwei Schwungradsegmenten aufgebaut ist, wobei ein erstes Schwungradsegment fest mit der Kurbelwelle verbunden ist und dieses erste Schwungradsegment mit einem zweiten Schwungradsegment mindestens mittels eines Federelementes verbunden ist, so dass beide Schwungradsegmente unter Vorspannung des mindestens einen Federelementes gegeneinander um die Kurbelwellendrehachse verdrehbar sind und das zweite Schwungradsegment unter Zwischenschaltung dieses mindestens einen Federelementes mit der Kurbelwelle verbunden ist, wobei zum kontrollierten Abstellen und Starten der Brennkraftmaschine das zweite Schwungradsegment mittels einer ersten motorseitigen Arretierung im wesentlichen drehfest fixierbar ist.

Ein derartiges Verfahren wird beispielsweise in der FR-A-2 267 897 beschrieben.

Zunächst soll auf die beiden explizit genannten Bauteile der Brennkraftmaschine, nämlich auf die Kurbelwelle und auf das Schwungrad, eingegangen werden, bevor auf das Verfahren und die Durchführung eines solchen Verfahrens Bezug genommen wird.

Die Kurbelwelle einer Brennkraftmaschine nimmt die Pleuelstangenkräfte auf, die sich aus den Gaskräften infolge der Kraftstoffverbrennung im Brennraum und den Massenkräften infolge der ungleichförmigen Bewegung der Triebwerksteile zusammensetzen. Dabei wird die oszillierende Hubbewegung insbesondere der Kolben in eine rotierende Drehbewegung der Kurbelwelle transformiert. Die Kurbelwelle überträgt dabei das Drehmoment an den Antrieb und an das Schwungrad.

Die Kurbelwelle besitzt eine bestimmte Drehelastizität und bildet zusammen mit den an sie angelenkten Bauteilen, insbesondere den Pleuelstangen und Kolben, ein schwingungsfähiges System, welches durch die an den Kurbelzapfen angreifenden Gas- und Massenkräften zu Drehschwingungen angeregt wird.

Um die Drehschwingungen zu dämpfen, können Drehschwingungsdämpfer vorgesehen werden. Durch eine Relativbewegung der Masse des Schwingungsdämpfers zur Kurbelwelle wird ein Teil der Drehschwingungsenergie durch Reibungsarbeit abgebaut.

Zur Minderung der Drehzahlschwankungen wird die Masse des beschriebenen, schwingungsfähigen Systems durch die Anordnung eines Schwungrades auf der Kurbelwelle erhöht. Infolge der größeren Masse verfügt das System über eine erhöhte Trägheit, weshalb das System insgesamt unempfindlicher gegenüber Drehzahlschwankungen ist und die Drehbewegung der Kurbelwelle gleichförmiger wird. Das Schwungrad speichert Energie und gibt diese bei sinkender Drehzahl an die Kurbelwelle ab. D. h. das als Energiereservoir dienende Schwungrad gibt Energie an die Kurbelwelle ab, sobald es verzögert wird, und verleiht der Kurbelwelle und dem gesamten System damit eine gewisse Trägheit, indem es versucht, durch Energieabgabe der Verzögerung entgegenzuwirken und die Bewegung aufrecht zu erhalten. Auf diese Weise wirkt das Schwungrad sowohl bei Beschleunigungen als auch bei Verzögerungen für einen ruhigen und runden Lauf der Kurbelwelle und der mit der Kurbelwelle gekoppelten Bauteile.

Günstig wirkt sich das Schwungrad bzw. die hohe Masse daher auch bei Fehlzündungen und Zündaussetzern aus. Infolge der Trägheit des Schwungrades bleibt die Drehbewegung der Kurbelwelle mehr oder weniger gleichförmig erhalten d.h. die Drehbewegung wird nur geringfügig gestört.

Das Schwungrad kann nach dem Stand der Technik als Zweimassen-Schwungrad ausgebildet werden und übernimmt dann zusätzlich die Funktion eines Schwingungsdämpfers, welcher die Drehschwingungen zwischen Kupplung und Antrieb mindert. In der Regel ist das Schwungrad auf der einen Seite an der Kurbelwelle befestigt und auf der anderen Seite über die Kupplung mit dem Getriebe verbunden. Bei dem zweigeteilten Schwungrad sind üblicherweise die beiden scheibenförmigen Teile mittels innenliegender Schraubenfedern miteinander verbunden.

Nach dem Stand der Technik werden die Kurbelwelle und das Schwungrad als separate selbständige Bauteile gefertigt und dann bei der Montage miteinander verschraubt d. h. unlösbar miteinander verbunden. Hierzu verfügen beide Bauteile über Flansche und über in den Flanschen angeordnete Butzen bzw. Löcher.

Verfahren zum kontrollierten Abstellen einer Brennkraftmaschine verfolgen in der Regel die Reduzierung des Kraftstoffverbrauchs der Brennkraftmaschine. Aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, ist man bei der Entwicklung von Verbrennungsmotoren ständig bemüht, den Kraftstoffverbrauch zu minimieren. Dabei steht einerseits die verbesserte d.h. effektivere Verbrennung im Vordergrund der Bemühungen. Andererseits können aber auch bestimmte Strategien im Hinblick auf den grundsätzlichen Betrieb der Brennkraftmaschine zielführend sein.

Ein Konzept zur Verbesserung des Kraftstoffverbrauchs eines Fahrzeuges besteht beispielsweise darin, die Brennkraftmaschine - statt sie im Leelauf weiter zu betreiben - abzuschalten, wenn kein momentaner Leistungsbedarf besteht. In der Praxis bedeutet dies, daß zumindest bei Fahrzeugstillstand die Brennkraftmaschine ausgeschaltet wird. Ein Anwendungsfall ist der Stop-and-Go-Verkehr, wie er sich beispielsweise im Stau auf Autobahnen und Landstraßen einstellt. Im innerstädtischen Verkehr ist der Stop-and-Go-Verkehr infolge der vorhandenen und nicht aufeinander abgestimmten Ampelanlagen nicht mehr die Ausnahme, sondern sogar die Regel. Weitere Anwendungsfälle bieten beschrankte Bahnübergänge und dergleichen.

Problematisch bei den Konzepten, welche zur Verbesserung des Kraftstoffverbrauchs die Brennkraftmaschine bei fehlendem Bedarf abschalten, ist die Notwendigkeit die Brennkraftmaschine wieder zu starten. Probleme bereitet das Neustarten, weil bei unkontrolliertem Abstellen der Brennkraftmaschine, die Kurbel- und die Nockenwelle in einer beliebigen und zudem nicht bekannten Stellung zum Stehen kommen. Folglich ist die Position der Kolben in den einzelnen Zylindern der Brennkraftmaschine ebenfalls nicht bekannt und dem Zufall überlassen. Diese Informationen sind aber für einen unkomplizierten und möglichst schnellen und damit kraftstoffsparenden Neustart unerläßlich.

Bei einer Brennkraftmaschine, die mit einer elektronisch geregelten Zündung und/oder einer elektronisch geregelten Einspritzung ausgestattet ist, liefern an der Kurbelwelle angeordnete Marker Signale über die Kurbelwinkelstellung an mit der Motorsteuerung verbundene Sensoren zur Steuerung des Zünd- und des Einspritzzeitpunktes. Zur Generierung dieser Signale ist es aber zunächst erforderlich, die Kurbelwelle in Drehung zu versetzen. Direkt zu Beginn des Neustarts und des Starts im allgemeinen besteht Unklarheit über den richtigen Einspritz- und Zündzeitpunkt, so daß eine Einlaufphase zur Synchronisation der Kurbelwinkelstellung einerseits und der Motorbetriebsparameter andererseits erforderlich wird. Zudem müssen Geräte zum Starten bzw. Neustarten der Brennkraftmaschine vorgesehen werden, beispielsweise ein konventioneller Anlasser oder ein ähnliches Gerät, das geeignet ist, die Kurbelwelle zwangsweise in Drehung zu versetzen, wie beispielsweise ein Elektromotor.

Um den Neustart zu vereinfachen, werden nach dem Stand der Technik verschiedene Konzepte vorgeschlagen.

Die deutsche Offenlegungsschrift DE 42 30 616 schlägt beispielsweise vor, die Winkellage der Kurbelwelle, welche beim Abschalten registriert wird, zu speichern und für den Neustart zu verwenden, so daß die geeigneten Zündzeitpunkte und Einspritzzeitpunkte unmittelbar zur Verfügung stehen. Diese Vorgehensweise hat sich aber in der Praxis nicht bewährt, da die gespeicherten Informationen über die Stellung der Kurbelwelle zu ungenau sind.

Andere Lösungsansätze präferieren Verfahren zum kontrollierten Abstellen und Starten der Brennkraftmaschine. Das kontrollierte Abstellen besteht dabei darin, ganz bestimmte vorgebare Kurbelwinkelpositionen - insbesondere sogenannte Vorzugspositionen - bewußt beim Abschalten der Brennkraftmaschine anzufahren. Die Endstellung der Kurbelwelle wird dabei nicht mehr dem Zufall überlassen und mehr oder weniger genau registriert, sondern es werden gezielt für den Neustart vorteilhafte Kurbelwinkelstellungen herbeigeführt.

Bei Brennkraftmaschinen mit Direkteinspritzung ist es bei geeigneter Kurbelwinkelstellung sogar ohne Starter möglich, aus dem Stillstand direkt zu starten bzw. neu zu starten. Dabei wird Kraftstoff direkt in die Brennräume der stillstehenden Brennkraftmaschine eingespritzt und mittels einer Zündkerze gezündet, so daß die Explosion des Luft-Kraftstoffgemisches die Kolben in Bewegung bringt, wodurch die Kurbelwelle in Drehung versetzt wird.

Diese Art des Startens bzw. Neustartens erfordert aber die Einhaltung bestimmter Randbedingungen. Insbesondere muß die Kurbelwelle - wie bereits erwähnt - in einer bestimmten Position bzw. in einem bestimmten Kurbelwinkelbereich stehen. Insofern sind gerade bei Brennkraftmaschinen mit Direkteinspritzung Verfahren zum kontrollierten Abstellen zielführend.

Ein Verfahren zum kontrollierten Abstellen einer Brennkraftmaschine wird beispielsweise in der WO 01/48373 offenbart. Die WO 01/48373 lehrt die Anwendung eines Verfahrens, bei dem nach dem Abschalten d. h. nach Beendigung des regulären Betriebes der Brennkraftmaschine eine Verstellvorrichtung aktiviert und angesteuert wird, mit der die Kurbelwelle und/oder die Nockenwelle in eine vorgebbare vorteilhafte Winkelstellung bewegt wird. Dabei können sowohl aktive wie passive Verstellvorrichtungen zum Einsatz kommen.

Als aktive Verstellvorrichtung kann ein Elektromotor dienen, der ein Drehmoment auf die Kurbelwelle überträgt und diese nach dem Abschalten der Brennkraftmaschine in die gewünschte Position dreht, welche dann bis zum Neustarten der Brennkraftmaschine beibehalten wird. In der WO 01/48373 werden auch aktive Verstellvorrichtungen beschrieben, welche Mittel zur Aktivierung der Einspritzung und Zündung der Brennkraftmaschine nach Beendigung ihres regulären Betriebes aufweisen. Diese Mittel werden eingesetzt, um gezielt Verbrennungsvorgänge in den Zylindern zu initiieren, mit denen ein bestimmtes Drehmoment auf die Kurbelwelle übertragen wird, so daß eine vorgebbare vorteilhafte Kurbelwinkelstellung angefahren werden kann.

Passive Verstellvorrichtungen können aber gemäß der WO 01/48373 ebenfalls eingesetzt werden, wobei diese passiven Verstellvorrichtungen nach Beendigung des regulären Betriebs der Brennkraftmaschine die im Nachlauf der Kurbelwelle noch vorhandene Drehbewegung ausnutzen und in der Art beeinflussen, daß die Kurbelwelle in der vorgegebenen vorteilhaften Kurbelwellenstellung zum Stillstand kommt. Als passive Verstellvorrichtung werden Mittel vorgeschlagen, die beispielsweise eine Gaswechselventilsteuerung umfassen, welche bei geeigneter Ansteuerung ein Bremsmoment auf die Brennkraftmaschine bzw. Kurbelwelle überträgt, so daß die Verzögerung der Welle und damit ihre Endstellung steuerbar wird.

Die in der WO 01/48373 aufgezeigten Verstellvorrichtungen sind aber nicht geeignet, die Endstellung der Kurbelwelle mit der nötigen Genauigkeit anzusteuern. Zudem machen die aktiven Verstellvorrichtungen entweder zusätzliche Bauteile - wie unter Umständen noch nicht vorhandene Elektromotoren - zur Aufbringung eines Verstelldrehmomentes erforderlich, oder sie arbeiten wie bei der Initüerung gezielter Verbrennungsvorgänge zum Anfahren der vorgegebenen Kurbelwinkelstellung mittels einer zusätzlichen Kraftstoffeinspritzung und -zündung. Gerade das letztgenannte Verfahren, welches die Verwendung von Kraftstoff erfordert, steht in krassem Gegensatz zu dem grundsätzlichen Ziel der Abschaltung der Brennkraftmaschine, nämlich durch das Abstellen der Brennkraftmaschine Kraftstoff zu sparen und damit den Kraftstoffverbrauch eines Fahrzeuges zu optimieren. Aber auch die Verwendung eines Elektromotors ist unter diesem Aspekt nicht zielführend, da der Energiebedarf des Elektromotors den Gesamtwirkungsgrad der Brennkraftmaschine nachteilig beeinflußt, was ebenfalls im Widerspruch zu der eigentlichen Zielsetzung steht, den Wirkungsgrad durch Kraftstoffersparnis zu optimieren.

Im Vergleich zu den aktiven Verstellvorrichtungen bieten die passiven Verstellvorrichtungen den Vorteil, daß ihr Energieverbrauch in der Regel niedriger ist und einen auch im Hinblick auf die zugrunde liegende Aufgabe akzeptabeln Wert aufweist, da die passiven Verstellvorrichtungen eine Drehbewegung der Kurbelwelle nicht initiieren, sondern prinzipbedingt lediglich eine vorhandene Drehbewegung der Kurbelwelle in geeigneter Weise verzögern.

Ein Verfahren zur Auslaufsteuerung einer Brennkraftmaschine, bei dem gezielt die Gasaustauschventile der Brennkraftmaschine zur Ansteuerung der Vorzugspositionen verwendet werden, ist in der WO 01/44636 A2 beschrieben. Durch geeignete Ansteuerung d.h. durch geeignetes Öffnen und Schließen der Gasaustauschventile wird dabei Einfluß genommen auf den Brennraumdruck und damit auf das von den Gaskräften über den Kolben und die Pleuelstange auf die Kurbelwelle ausgeübte Drehmoment. Dieses Verfahren setzt aber eine Brennkraftmaschine voraus, die über eine zumindest teilweise variable Ventilsteuerung verfügt. Zudem ist eine komplexe und daher aufwendige Steuerung erforderlich.

Die deutsche Offenlegungsschrift DE 101 23 037 A1 erwähnt ein Zweimassen-Schwungrad im Zusammenhang mit einem Verfahren zum kontrollierten Abstellen einer Brennkraftmaschine, wobei gemäß der DE 101 23 037 A1 das Abstellen vorzugsweise in der Art erfolgen soll, daß das Zweimassen-Schwungrad möglichst wenig zum Schwingen angeregt wird, also insbesondere die Resonanzfrequenz des Zweimassen-Schwungrades umgangen wird.

Vor diesem Hintergrund ist es die Aufgabe der vorliegenden Erfindung, ein Verfahren gemäß dem Oberbegriff des Anspruchs 1 d. h. der gattungsbildenden Art aufzuzeigen, mit dem gezielt - nach dem Abstellen der Brennkraftmaschine - eine vorbestimmbare Position der Kurbelwelle angefahren werden kann und mit der ein Neustart möglich ist, der sich insbesondere durch einen geringen Energieverbrauch auszeichnet, wobei die nach dem Stand der Technik bekannten Nachteile überwunden werden.

Gelöst wird diese Aufgabe durch ein Verfahren zum kontrollierten Abstellen einer Brennkraftmaschine mit einer Kurbelwelle und einem Schwungrad, das auf der Kurbelwelle angeordnet ist und modular aus mindestens zwei Schwungradsegmenten aufgebaut ist, wobei ein erstes Schwungradsegment fest mit der Kurbelwelle verbunden ist und dieses erste Schwungradsegment mit einem zweiten Schwungradsegment mindestens mittels eines Federelementes verbunden ist, so dass beide Schwungradsegmente unter Vorspannung des mindestens einen Federelementes gegeneinander um die Kurbelwellendrehachse verdrehbar sind und das zweite Schwungradsegment unter Zwischenschaltung dieses mindestens einen Federelementes mit der Kurbelwelle verbunden ist, wobei zum kontrollierten Abstellen und Starten der Brennkraftmaschine das zweite Schwungradsegment mittels einer ersten motorseitigen Arretierung im wesentlichen drehfest fixierbar ist, und das dadurch gekennzeichnet ist, dass
■ ausgehend vom Betrieb der Brennkraftmaschine, bei dem die mindestens zwei Schwungradsegmente bei gelösten Arretierungen mit der Kurbelwelle umlaufen, beim Abstellen der Brennkraftmaschine nach Abschalten der Zündung und/oder der Kraftstoffzufuhr das zweite Schwungradsegment mittels der ersten Arretierung drehfest fixiert wird, während die Kurbelwelle mitsamt dem ersten Schwungradsegment unter Vorspannung des mindestens einen Federelementes ausläuft, wodurch die Kurbelwelle bis zu ihrem Stillstand verzögert wird.

Zur Durchführung dieses Verfahrens wird eine Brennkraftmaschine verwendet mit einer Kurbelwelle und einem Schwungrad, das auf der Kurbelwelle angeordnet ist und modular aus mindestens zwei Schwungradsegmenten aufgebaut ist, und die dadurch gekennzeichnet ist, daß ein erstes Schwungradsegment fest mit der Kurbelwelle verbunden ist und dieses erste Schwungradsegment mit einem zweiten Schwungradsegment mindestens mittels eines Federelementes verbunden ist, so daß beide Schwungradsegmente unter Vorspannung des mindestens einen Federelementes gegeneinander um die Kurbelwellendrehachse verdrehbar sind und das zweite Schwungradsegment unter Zwischenschaltung dieses mindestens einen Federelementes mit der Kurbelwelle verbunden ist, wobei zum kontrollierten Abstellen und Starten der Brennkraftmaschine das zweite Schwungradsegment mittels einer ersten motorseitigen Arretierung im wesentlichen drehfest fixierbar ist.

Als motorseitige Arretierung wird im Rahmen der vorliegenden Erfindung eine Arretierung bezeichnet, die im Hinblick auf das Kraftfahrzeug und damit im Hinblick auf die Brennkraftmaschine im Gegensatz zu den sich bewegenden, insbesondere umlaufenden, Bauteilen, wie beispielsweise die Kurbelwelle, im wesentlichen ortsfest ist. Die motorseitige Arretierung kann dafür an die Brennkraftmaschine oder die Karosserie angelenkt werden. Der Begriff Brennkraftmaschine umfaßt dabei neben dem eigentlichen Verbrennungsmotor auch die Nebenaggregate und Untersysteme des Motors. Die gewählte Bezeichnung dient insbesondere zur Unterscheidung gegenüber kurbelwellenseitig angeordneten Bauteilen, wie beispielsweise dem fest d.h. verdrehsicher auf der Kurbelwelle angeordneten ersten Schwungradsegment.

Dabei kann die Arretierung an sich durchaus nachgiebig bzw. verformbar ausgebildet sein, weshalb auch die Formulierung gewählt wurde, daß die Arretierung im wesentlichen ortsfest ausgeführt sein muß.

Die gesamte Schwungradmasse ergibt sich aus der Summe der Einzelmassen der Schwungradsegmente. Prinzipbedingt läuft das erste und fest auf der Kurbelwelle angeordnete Schwungradsegment mit der Kurbelwelle um. Hingegen wird das zweite Schwungradsegment, das nicht fest mit der Kurbelwelle verbunden ist, von dem ersten Schwungradsegment, mit dem es mittels mindestens eines Federelementes verbunden ist, mitgenommen. Infolge der elastischen bzw. nachgiebigen Kopplung des zweiten Schwungradsegments mit der Kurbelwelle mittels Federelement, ist das zweite Schwungradsegment gegenüber der Kurbelwelle um einen begrenzten Winkel verdrehbar, dessen absoluter Betrag von der konstruktiven Ausgestaltung des Schwungrades, insbesondere der Anzahl der Federelemente, abhängt.

Bei außer Betrieb befindlicher Brennkraftmaschine und stillstehender Kurbelwelle nimmt das mindestens eine Federelement eine stabile Position ein, wenn die mindestens zwei Schwungradsegmente gegeneinander verdrehbar sind. Wird nur ein Federelement verwendet, ist die stabile Position dadurch gekennzeichnet, daß keine Federkraft vorliegt und das Federelement nicht vorgespannt ist d.h. weder auf Zug noch auf Druck beansprucht wird. Bei Verwendung von mehr als einem Federelement ist die stabile Position dadurch gekennzeichnet, daß sich die Federkräfte der einzelnen Federelemente miteinander im Gleichgewicht befinden.

Das mindestens eine Federelement übernimmt bei der erfindungsgemäßen Brennkraftmaschine mehrere Aufgaben. Zum einen hat es - wie bereits erwähnt - bei umlaufender Kurbelwelle die Funktion, das zweite Schwungradsegment mitzunehmen. Das mindestens eine Federelement hat also die Funktion eines Mitnehmers.

Zum anderen gewährleistet das mindestens eine Federelement einen weichen Auslauf der Kurbelwelle und damit ein kontrolliertes Abstellen der Brennkraftmaschine. Nach dem Abschalten der Zündung und/oder der Kraftstoffzufuhr wird das zweite Schwungradsegment mittels der ersten Arretierung motorseitig fixiert, was mehr oder weniger abrupt erfolgt und durch eine nachgiebig ausgeführte Arretierung lediglich gedämpft werden kann.

Die eigentliche Verzögerung der Kurbelwelle bis zum Stillstand erfolgt unter Vorspannung des mindestens einen Federelementes. Dabei wird das erste Schwungradsegment mitsamt der Kurbelwelle durch die sich zunehmend aufbauende Federkraft verzögert, wobei sich das erste Schwungradsegment über das mindestens eine Federelement an dem fest arretierten zweiten Schwungradsegment abstützt.

An die Verzögerung der Kurbelwelle können sich unterschiedliche Szenarien anschließen.
Insbesondere kann die von der Kurbelwelle während des Auslaufvorganges abgegebene kinetische Energie in dem mindestens einen Federelement gespeichert und für einen Neustart verwendet werden, was im Rahmen der bevorzugten Ausführungsformen näher erläutert werden wird. Die Arbeitsweise der Vorrichtung im einzelnen wird noch näher im Zusammenhang mit dem erfindungsgemäßen Verfahren beschrieben.

Die erfindungsgemäße Brennkraftmaschine ermöglicht einen einfachen und gleichzeitig kraftstoffsparenden Neustart, da die Kurbelwelle gezielt in einer sogenannten Vorzugsposition angehalten werden kann d. h. in einem Kurbelwinkelbereich, der für den Start der Brennkraftmaschine als vorteilhaft anzusehen ist. So kann ein Ottomotor mit Direkteinspritzung direkt aus dem Stillstand durch Einspritzung von Kraftstoff in die Zylinder und Zündung des eingespritzten Kraftstoffes gestartet werden.

Das erfindungsgemäß ausgebildete Schwungrad kann als eine passive Verstellvorrichtung angesehen werden, bei der nach Beendigung des regulären Betriebs der Brennkraftmaschine ein nicht konstantes Drehmoment auf die Kurbelwelle ausgeübt wird bis die Kurbelwelle - vorzugsweise in der gewünschten Vorzugsposition - zum Stillstand kommt.

Vorteilhaft ist bei dem erfindungsgemäß ausgebildeten Schwungrad nicht nur der geringe Energiebedarf zur Betätigung der Abstellvorrichtung, was ein Kennzeichen passiver Vorrichtungen ist, sondern auch die geringe Anzahl an zusätzlichen Bauteilen und der geringe Raumbedarf der Vorrichtung. Der geringe Raumbedarf unterstützt das grundsätzliche Ziel der Konstrukteure, im Motorraum des Kraftfahrzeuges ein möglichst effektives d. h. dichtes Packaging der gesamten Antriebseinheit zu realisieren. Die geringe Anzahl an Bauteilen, die erforderlich ist, um aus einem herkömmlichen Zweimassen-Schwungrad ein erfindungsgemäßes Schwungrad zu bilden, senkt die Herstellungs- aber auch die Montagekosten.

Mit dem Schwungrad wird ein grundsätzlich schon vorhandenes Bauteil der Brennkraftmaschine verwendet, um ein kontrolliertes Abstellen zu bewerkstelligen. Das Vorsehen zusätzlicher Verstellvorrichtungen ist nicht erforderlich. Insbesondere muß keine aktive Verstellvorrichtung, beispielsweise ein Elektromotor, wie dies die WO 01/48373 vorschlägt, vorgesehen werden, um nach dem Abschalten der Brennkraftmaschine die Kurbelwelle in die gewünschte Position zu drehen. Es sind lediglich Mittel zur Arretierung des zweiten Schwungradsegmentes erforderlich.

Mit der erfindungsgemäßen Brennkraftmaschine wird somit die erste der Erfindung zugrunde liegende Aufgabe gelöst, nämlich eine Brennkraftmaschine bereitzustellen, mit der gezielt - nach dem Abstellen der Brennkraftmaschine - eine vorbestimmbare Position der Kurbelwelle angefahren werden kann und mit der ein Neustart möglich ist, der sich insbesondere durch einen geringen Energieverbrauch auszeichnet, wobei die nach dem Stand der Technik bekannten Nachteile überwunden werden.

Vorteilhaft sind Ausführungsformen der Brennkraftmaschine, bei denen das Schwungrad modular aus zwei Schwungradsegmenten aufgebaut ist

Vorteilhaft sind Ausführungsformen der Brennkraftmaschine, bei denen die erste motorseitige Arretierung einen beweglichen Stift umfaßt, der zur Fixierung des zweiten Schwungradsegments in eine Ausnehmung des zweiten Schwungradsegmentes einbringbar ist.

Zum Abstellen wird das zweite Schwungradsegment der rotierenden Kurbelwelle in einem ersten Schritt beispielsweise durch axiales Verschieben eines Stiftes arretiert. Das erste Schwungradsegment wird dann in einem zweiten Schritt mitsamt der Kurbelwelle unter Vorspannung des mindestens einen Federelementes verzögert und zum Stillstand gebracht.

Vorteilhaft sind auch Ausführungsformen der Brennkraftmaschine, bei denen die erste motorseitige Arretierung einen verschwenkbaren Riegel umfaßt, der zur Fixierung des zweiten Schwungradsegmentes in eine Ausnehmung des zweiten Schwungradsegmentes schwenkbar ist.

Im Gegensatz zu der zuvor beschriebenen Arretierung wird bei dieser Ausführungsform die Vorrichtung zum kontrollierten Abstellen durch Verschwenken eines Riegels betätigt bzw. aktiviert und nicht durch axiales Verschieben eines Stiftes.

Vorteilhaft sind Ausführungsformen der Brennkraftmaschine, bei denen das erste fest mit der Kurbelwelle verbundene Schwungradsegment mindestens einen radial nach außen hervorstehenden Flügel aufweist und das zweite Schwungradsegment ringförmig ausgebildet ist und mindestens eine radial nach innen hervorstehende Nase aufweist, wobei zwischen dem mindestens einen Flügel und der mindestens einen Nase das mindestens eine Federelement angeordnet ist.

Vorteilhafterweise überlappen sich dabei der mindestens eine Flügel und die mindestens eine Nase in radialer Richtung, so daß das mindestens eine Federelement auf einem Kreisbogen um die Kurbelwellendrehachse in Umfangsrichtung abgeordnet werden kann, so daß die Achse des Federelementes, beispielsweise einer Schraubenfeder, im wesentlichen mit der Hauptbelastungsrichtung zusammenfällt, wenn die beiden Schwungradsegmente gegeneinander verdreht werden. Günstig ist dies nicht nur im Hinblick auf die Krafteinleitung in das mindestens eine Federelement, sondern auch im Hinblick auf die Einleitung der Federkräfte in die beiden Schwungradsegmente.

Eine derartige Ausführungsform, die vier Flügel, vier Nasen und acht Federelemente aufweist, wird noch näher im Zusammenhang mit der Figurenbeschreibung weiter unten erläutert.

Vorteilhaft sind Ausführungsformen der Brennkraftmaschine, bei denen eine zweite motorseitige Arretierung vorgesehen ist, mit der das erste Schwungradsegment drehfest fixierbar ist. Diese Ausführungsform gestattet eine Fixierung des ersten Schwungradsegmentes bei gleichzeitiger Fixierung des zweiten Schwungradsegmentes und damit eine Fixierung des vorgespannten Federelementes. Hierdurch wird eine Nutzung der in dem Federelement gespeicherten Energie ermöglicht. Die gespeicherte Energie kann dabei zum Start bzw. Neustart der Brennkraftmaschine genutzt werden, indem die beiden Arretierungen in geeigneter Weise gelöst werden, was weiter unten im Zusammenhang mit den bevorzugten Ausführungsformen des Verfahrens beschrieben wird.

Des weiteren kann die gespeicherte Energie - falls sich die Kurbelwelle bei Stillstand nicht in einer Vorzugsposition befindet - dazu genutzt werden, die Kurbelwelle in eine Vorzugsposition zu drehen, wozu die erste oder beide Arretierungen gegebenenfalls mehrmals und in geeigneter Weise gelöst und wieder fixiert werden müssen.

Bei dieser Ausführungsform dient das erfindungsgemäß ausgebildete Schwungrad folglich auch als aktive Verstellvorrichtung, wobei die Kurbelwelle in einem mehrstufigen Verfahren in eine gewünschte Vorzugsposition gebracht wird.

Das im Zusammenhang mit der Brennkraftmaschine Gesagte gilt ebenfalls für das erfindungsgemäße Verfahren.

Das erfindungsgemäße Verfahren nutzt den Umstand, daß Kurbelwellen von Brennkraftmaschinen mit Schwungrädern gegebenenfalls mit Zweimassen-Schwungrädern ausgestattet sind, die mit der Kurbelwelle umlaufen und daher am Auslaufvorgang der Kurbelwelle teilnehmen. Daher wird erfindungsgemäß vorgeschlagen, den Auslaufvorgang der Kurbelwelle dadurch kontrolliert zu steuern, dass auf die Bewegung des Schwungrades Einfluß genommen wird.

In welcher Weise nach der Arretierung des zweiten Schwungradsegmentes weiter verfahren wird, ist von der jeweiligen Zielsetzung abhängig. Dies wird im Zusammenhang mit den bevorzugten Verfahrensvarianten erläutert und deutlich gemacht.

Vorteilhaft sind Ausführungsformen des Verfahrens, bei denen
■ die Kurbelwelle in einer vorbestimmbaren Position angehalten wird.

Nur auf diese Weise können Vorzugspositionen als vorbestimmbare Positionen angefahren werden. Abhängig von der jeweiligen Verfahrenvariante ist es mehr oder weniger aufwendig, bestimmte Positionen gezielt anzufahren.

Vorteilhaft sind Ausführungsformen des Verfahrens, bei denen
■ die Fixierung des zweiten Schwungradsegmentes in der Art vorgenommen wird, daß die nach Abschalten der Brennkraftmaschine bis zu ihrem Stillstand abgegebene kinetische Energie mittels Federelement kontrolliert in der Weise abgebaut wird, daß die Kurbelwelle unter Vorspannung des mindestens einen Federelementes in einer vorbestimmbaren Position angehalten wird, und
■ das erste Schwungradsegment mittels einer zweiten Arretierung drehfest fixiert wird, wenn sich die Kurbelwelle in der vorbestimmbaren Position befindet, wodurch die nach Abschalten der Brennkraftmaschine bis zum Stillstand der Kurbelwelle abgegebene Energie zumindest teilweise in dem mindestens einen Federelement gespeichert wird.

Um mittels dieser Verfahrensvariante präzise eine bestimmte Position der Kurbelwelle anfahren zu können, ist eine Vielzahl von Informationen notwendig. Dabei kann auf alle bereits für die übliche Motorsteuerung gemessenen und/oder abgeleiteten Daten zurückgegriffen werden, insbesondere auf die Motordrehzahl, den Kurbelwellenwinkel, die Motortemperatur beziehungsweise eine hiermit korrelierende Temperatur wie die Kühlmitteltemperatur und/oder den Ansaugdruck im Ansaugkrümmer. Die genannten Größen haben erfahrungsgemäß den stärksten Einfluß auf die Auslaufbewegung der Brennkraftmaschine bzw. der Kurbelwelle.

Im Zusammenhang mit der in Rede stehenden Verfahrensvariante ist es erforderlich, zu ermitteln, wie viel Energie nach Abstellen der Brennkraftmaschine im Antriebsstrang vorhanden ist und wie viel Energie von dem mindestens einem Federelement aufgenommen werden muß.

Ein Modell für die Auslaufbewegung der Brennkraftmaschine wird beispielsweise in der europäischen Patentanmeldung mit der Anmeldenummer 03101379.0 beschrieben. Dieses Modell berücksichtigt die aktuelle kinetische Energie des Antriebsstranges, die Reibungsverluste und/oder die Kompressions- und Expansionsvorgänge in den Zylindern der Brennkraftmaschine. Ein derartiges Modell kann aufgrund theoretischer Überlegungen gewonnen und in Form mathematischer Gleichungen implementiert werden. Vorzugsweise wird das Modell jedoch ganz oder zumindest teilweise empirisch gewonnen d.h. durch Beobachtung des Motorverhaltens und Aufbereitung der dabei gewonnenen Meßdaten (z. B. als eine Lookup-Tabelle).

Die Fixierung des ersten Schwungradsegmentes mittels Arretierung gestattet einen kraftstoffsparenden Neustart, wie die nächste Verfahrensvariante zeigt, oder aber das nochmalige Verändern der Kurbelwellenstellung.

Vorteilhaft sind in diesem Zusammenhang Ausführungsformen des Verfahrens, bei denen
■ ausgehend von einer Stopposition, in der das mindestens eine Federelement vorgespannt ist und in der die mindestens zwei Schwungradsegmente mittels der Arretierungen fixiert sind,
■ zum Starten der Brennkraftmaschine das zweite Schwungradsegment durch Lösen der ersten Arretierung freigesetzt wird, wodurch das zweite Schwungradsegment infolge des Entspannens des mindestens einen vorgespannten Federelementes beschleunigt wird, und
■ das erste Schwungradsegment durch Lösen der zweiten Arretierung freigesetzt wird, nachdem das mindestens eine Federelement sich entspannt hat und erneut vorgespannt wird, wodurch die Kurbelwelle mitsamt dem ersten Schwungradsegment infolge eines Entspannens des mindestens einen vorgespannten Federelementes in Drehung versetzt wird.

Soll die Brennkraftmaschine infolge eines momentan fehlenden Leistungsbedarfs - beispielsweise an einer roten Ampelanlage - abgeschaltet anstatt im Leerlauf weiter betrieben zu werden, wird nach Abschalten der Zündung und/oder der Kraftstoffzufuhr das erste Schwungradsegment mitsamt Kurbelwelle kontrolliert verzögert und anschließend das infolge des Auslaufvorganges vorgespannte mindestens eine Federelement fixiert.

Schaltet dann die Ampelanlage auf grün um, kann die in dem mindestens einen Federelement gespeicherte Energie in vorteilhafter Weise für einen Neustart genutzt werden, indem die beiden Arretierungen in der beschriebenen Weise gelöst werden, wodurch die Kurbelwelle in Drehung versetzt wird.

Die in dem mindestens einen Federelement gespeicherte Energie kann auch - wie weiter oben bereits angedeutet - auf andere Weise genutzt werden, beispielsweise zum aktiven Verstellen der Kurbelwelle.

Vorteilhaft sind nämlich auch Ausführungsformen des Verfahrens, bei denen
■ falls sich die Kurbelwelle bei Stillstand nicht in einer Vorzugsposition befindet, die kinetische Energie des mindestens einen vorgespannten Federelementes dazu genutzt wird, die Kurbelwelle in eine Vorzugsposition zu drehen, wozu die erste oder beide Arretierungen gegebenenfalls mehrmals und in geeigneter Weise gelöst und fixiert werden.

Dabei wird die rotierende Kurbelwelle in einem ersten Schritt verzögert und zum Stillstand gebracht. Im Rahmen des ersten Schritts fungiert das modular aufgebaute Schwungrad somit als passive Verstellvorrichtung, wobei die beiden Schwungradsegmente bei Stillstand der Kurbelwelle fixiert werden. In einem zweiten Schritt wird durch Lösen mindestens der zweiten Arretierung das erste Schwungradsegment zeitweise freigegeben und die in dem mindestens einen Federelement gespeicherte Energie dazu verwendet, die Kurbelwelle in eine vorgebbare vorteilhafte Winkelstellung zu bewegen. Dabei dient das variable Schwungrad dann als aktive Verstellvorrichtung, die aber im Gegensatz zu den aus dem Stand der Technik bekannten aktiven Verstellvorrichtungen keine externe Energiezufuhr benötigt. Die zum Verstellen der Kurbelwelle erforderliche Energie stammt dabei aus dem mindestens einen während der Verzögerung vorgespannten Federelement.

Vorteilhaft sind aber auch Ausführungsformen des Verfahrens, bei denen
■ die Fixierung des zweiten Schwungradsegmentes in der Art vorgenommen wird, daß die nach Abschalten der Brennkraftmaschine bis zu ihrem Stillstand abgegebene kinetische Energie infolge Spannen und Entspannen des mindestens einen Federelements kontrolliert in der Weise abgebaut wird, daß die Kurbelwelle in einer vorbestimmbaren Position, in der sich das mindestens eine Federelement in einer stabilen Position befindet, angehalten wird.

Bei dieser Verfahrensvariante wird auf eine zweite Arretierung verzichtet. Nachdem das zweite Schwungradsegment mittels der ersten Arretierung motorseitig fixiert wurde, wird das erste Schwungradsegment mitsamt der Kurbelwelle unter Vorspannung des mindestens einen Federelementes bis zum Stillstand verzögert. Infolge der bei dieser Verfahrensvariante fehlenden zweiten Arretierung wird das Federelement nicht im vorgespannten Zustand fixiert, weshalb sich das mindestens eine Federelement wieder entspannt und dabei das erste Schwungradsegment mitsamt Kurbelwelle erneut in entgegengesetzter Richtung beschleunigt, um nach Durchschreiten der Nullage des Federelementes wieder verzögert und dann wieder in umgekehrter Richtung beschleunigt zu werden. Es vollzieht sich eine rotatorische Pendelbewegung der Kurbelwelle, bei der sich die kinetische Energie des Antriebsstranges langsam verbraucht, insbesondere durch Reibungsverluste und Umwandlung in Wärme aufgebraucht wird.

Die Endstellung der Kurbelwelle wird erreicht, wenn das mindestens eine Federelement seine stabile Position einnimmt, was bei nur einem Federelement dann der Fall ist, wenn das Federelement kraftfrei ist d. h. nicht vorgespannt ist. Bei Verwendung von mehr als einem Federelement ist die stabile Position dadurch gekennzeichnet, daß die Federkräfte der einzelnen Federelemente sich das Gleichgewicht halten.

Da die relative Anordnung der mindestens zwei Schwungradsegmente in der stabilen Position des mindestens einen Federelementes bekannt ist und auf die Stellung des zweiten Schwungradsegmentes im fixierten bzw. arretierten Zustand im Rahmen der Arretierung Einfluß genommen werden kann, läßt sich auch mit dieser Verfahrensvariante gezielt eine vorbestimmbare Position der Kurbelwelle anfahren. Komplexere Überlegungen zur Ermittlung der im Antriebsstrang vorhandenen und abzubauenden kinetischen Energie - wie oben im Zusammenhang mit der Verwendung einer zweiten Arretierung ausgeführt - sind nicht erforderlich.

Vorteilhaft sind dabei Ausführungsformen des Verfahrens, bei denen
■ ausgehend von einer Stopposition, in der sich das mindestens eine Federelement in einer stabilen Position befindet und in der das zweite Schwungradsegment mittels der ersten Arretierungen fixiert ist,
■ zum Starten der Brennkraftmaschine das zweite Schwungradsegment durch Lösen der ersten Arretierung freigesetzt wird, und
■ die Kurbelwelle in Drehung versetzt wird.
   Da das mindestens eine Federelement keine Energie für einen Neustart zur Verfügung stellen kann, muß die Kurbelwelle auf andere Weise in Drehung versetzt werden. Dies kann auf herkömmliche Weise geschehen d. h. unter Zuhilfenahme eines Elektromotors oder Generators als Starter.

Günstig ist es insbesondere in diesem Zusammenhang, wenn sich die stillstehende Kurbelwelle in einer Vorzugsposition befindet, weil eine Vorzugsposition günstig für einen Neustart ist.

Wenn die Kurbelwelle sich in einer Vorzugsposition befindet, besteht zu Beginn des Neustarts Klarheit über den richtigen Einspritzzeitpunkt und Zündzeitpunkt, so daß eine Einlaufphase zur Synchronisation der Motorbetriebsparameter nicht erforderlich ist. Ein schneller und damit insbesondere kraftstoffsparender Neustart wird ermöglicht.

Bei Brennkraftmaschinen mit Direkteinspritzung wird ein Starten ohne Starter d.h. ein Starten direkt aus dem Stillstand möglich, wofür lediglich Kraftstoff in die Brennräume der stillstehenden Brennkraftmaschine eingespritzt und mittels einer Zündkerze gezündet werden muß.

Aus den genannten Gründen sind insbesondere Ausführungsformen des Verfahrens vorteilhaft, bei denen die vorbestimmbare Position eine Vorzugsposition ist und die Kurbelwelle in dieser Vorzugsposition angehalten wird.

Im folgenden wird die Erfindung anhand von zwei Ausführungsbeispielen gemäß den Figuren 1 bis 4 näher beschrieben. Hierbei zeigt:
- Fig. 1: schematisch in einer perspektivischen Darstellung die Kurbelwelle und das Schwungrad einer ersten Ausführungsform einer Brennkraftmaschine,
- Fig. 2: schematisch in einer Seitenansicht das Schwungrad der in Figur 1 dargestellten ersten Ausführungsform der Brennkraftmaschine,
- Fig. 3: schematisch in einer perspektivischen Darstellung das Schwungrad einer zweiten Ausführungsform einer Brennkraftmaschine, und
- Fig.4: schematisch in einer Seitenansicht das Schwungrad der in Figur 3 dargestellten zweiten Ausführungsform der Brennkraftmaschine.

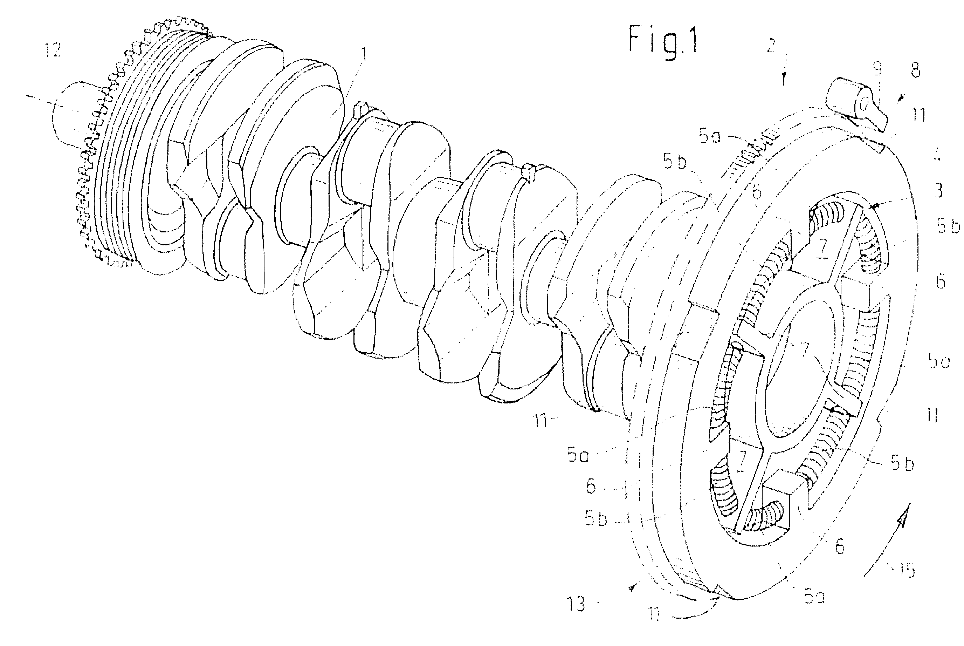

Figur 1 zeigt schematisch in einer perspektivischen Darstellung die Kurbelwelle 1 und das
Schwungrad 2 einer ersten Ausführungsform einer Brennkraftmaschine. Dabei ist das Schwungrad 2 an einem freien Wellenende 13 der Kurbelwelle 1 angeordnet. Bei der dargestellten Momentaufnahme befinden sich die Federelemente 5a, 5b in einer stabilen Position d.h. die Federkräfte halten sich das Gleichgewicht.

Bei der in Figur 1 dargestellten ersten Ausführungsform ist das Schwungrad 2 modular aus zwei Schwungradsegmenten 3, 4 aufgebaut, wobei die zwei Schwungradsegmente 3, 4 in Gestalt von Schwungradscheiben ausgebildet sind, die mittels acht Federelementen 5a, 5b miteinander verbunden sind. Hierzu weist das erste Schwungradsegment 3, das fest mit der Kurbelwelle 1 verbunden ist, vier radial nach außen hervorstehenden Flügel 7 auf, die in vier Zwischenräume 14 hineinragen, welche von vier Nasen 6 ausgebildet werden, die von dem zweiten ringförmig ausgebildeten Schwungradsegment 4 radial nach innen hervorstehen.

Zwischen einem Flügel 7 und einer Nase 6 ist jeweils ein Federelement 5a, 5b angeordnet, so daß insgesamt acht Federelemente 5a, 5b zum Einsatz kommen.

Das zweite Schwungradsegment 4 ist damit nicht direkt, sondern unter Zwischenschaltung der Federelemente 5a, 5b mit der Kurbelwelle 1 verbunden, weshalb das zweite Schwungradsegment 4 gegenüber der Kurbelwelle 1 und dem fest mit der Kurbelwelle 1 verbundenen ersten Schwungradsegment 3 unter Vorspannung der Federelemente 5a, 5b verdrehbar ist.

Die Flügel 7 und die Nasen 6 überlappen sich in radialer Richtung, so daß die Federelemente 5a, 5b auf einem Kreisbogen um die Kurbelwellendrehachse 12 in Umfangsrichtung abgeordnet werden können. Auf diese Weise korrespondieren die Achsen der Federelemente 5a, 5b im wesentlichen mit der Hauptbelastungsrichtung, wenn die beiden Schwungradsegmente 3, 4 gegeneinander verdreht werden.

Als Arretierung 8 ist bei der in Figur 1 gezeigten Ausführungsform ein verschwenkbarer Riegel 9 vorgesehen, der mit einer von insgesamt vier Ausnehmungen 11, welche auf der äußeren Mantelfläche des zweiten Schwungradsegmentes 4 angeordnet sind, durch Verschwenken in Eingriff gebracht wird, wodurch das zweite Schwungradsegment 4 verdrehsicher fixiert wird. Bei der Momentaufnahme gemäß Figur 1, welche eine Ruheposition der Brennkraftmaschine bzw. der Bauteile 1, 2 wiedergibt, ist die Arretierung 8 gelöst, so daß das zweite Schwungradsegment 4 frei verdrehbar mittels der Federelemente 5a, 5b auf der Kurbelwelle 1 gelagert ist.

Die Anzahl der Ausnehmungen 11 verdeutlicht, daß es in der Regel mehr als eine Vorzugsposition für die stillstehende Kurbelwelle 1 gibt. Insbesondere bei Mehrzylinder-Brennkraftmaschinen, bei denen die Zylinder mechanisch und/oder thermodynamisch versetzt betrieben werden bzw. arbeiten.

Wird die Brennkraftmaschine ausgehend von dieser Ruheposition gestartet, werden die Federelemente 5a, 5b zwangsläufig vorgespannt. Das erste Schwungradsegment 3 nimmt zwangsläufig an der Drehbewegung der Kurbelwelle 1 teil, da es fest mit der Kurbelwelle 1 verbunden ist. Das zweite Schwungradsegment 4 wird von dem ersten Schwungradsegment 3, mit dem es mittels Federelementen 5a, 5b verbunden ist, mitgenommen. Dabei werden die Federelemente 5a, die in Drehrichtung (Pfeil) gesehen vor den Flügeln 7 positioniert sind, komprimiert, wohingegen die Federelemente 5b auf der der Drehrichtung 15 abgewandten Seite der Flügel 7 auf Zug beansprucht werden.

Infolge der nachgiebigen Kopplung des zweiten Schwungradsegmentes 4 mit der Kurbelwelle 1 mittels Federelementen 5a, 5b ist das zweite Schwungradsegment 4 gegenüber der Kurbelwelle 1 um einen begrenzten Winkel verdrehbar.

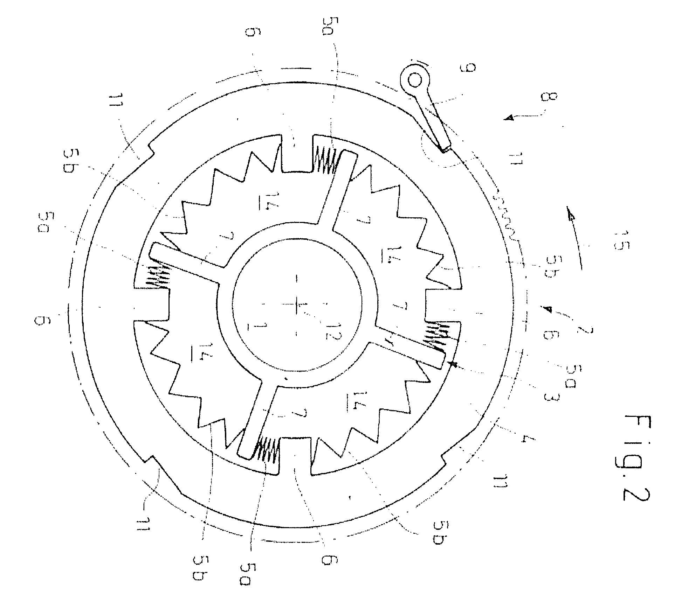

Figur 2 zeigt schematisch in einer Seitenansicht das Schwungrad 2 der in Figur 1 dargestellten ersten Ausführungsform in einer zweiten Momentaufnahme. Es sollen nur die Unterschiede zu der in Figur 1 dargestellten Momentaufnahme erörtert werden, weshalb im übrigen bezug genommen wird auf Figur 1. Für dieselben Bauteile wurden dieselben Bezugszeichen verwendet.

Im Gegensatz zu Figur 1 ist bei der in Figur 2 dargestellten Momentaufnahme das zweite Schwungradsegment 4 verdrehsicher fixiert.

Zum Abstellen wird das zweite Schwungradsegment 4 bei rotierender Kurbelwelle 1 in einem ersten Schritt durch Verschwenken des Riegels 9 arretiert. Dabei wird der Riegel 9 in Eingriff gebracht mit einer Ausnehmung 11 des zweiten Schwungradsegmentes 4. Das erste Schwungradsegment 3 wird aufgrund des auf diese Weise verdrehsicher fixierten zweiten Schwungradsegmentes 4 in einem zweiten Schritt mitsamt der Kurbelwelle 1 unter Vorspannung der Federelemente 5a, 5b verzögert und zum Stillstand gebracht.

Die Federelemente 5a, 5b übernehmen damit neben der Funktion, das zweite Schwungradsegment 4 bei umlaufender Kurbelwelle 1 mitzunehmen, auch die Aufgabe, im Rahmen eines kontrollierten Abstellens der Brennkraftmaschine einen weichen Auslauf der Kurbelwelle 1 zu gewährleisten. Das zweite Schwungradsegment 4 wird mittels der ersten Arretierung 8 motorseitig fixiert, was durch Verschwenken des Riegels 9 abrupt erfolgt.

Die Kurbelwelle 1 hingegen wird bis zu ihrem Stillstand unter Vorspannung der Federelemente 5a, 5b verzögert. Dabei wird das erste Schwungradsegment 3 mitsamt der Kurbelwelle 1 durch die sich zunehmend aufbauenden Federkräfte verzögert, wobei sich das erste Schwungradsegment 3 über die Federelemente 5a, 5b an dem fest arretierten zweiten Schwungradsegment 4 abstützt.

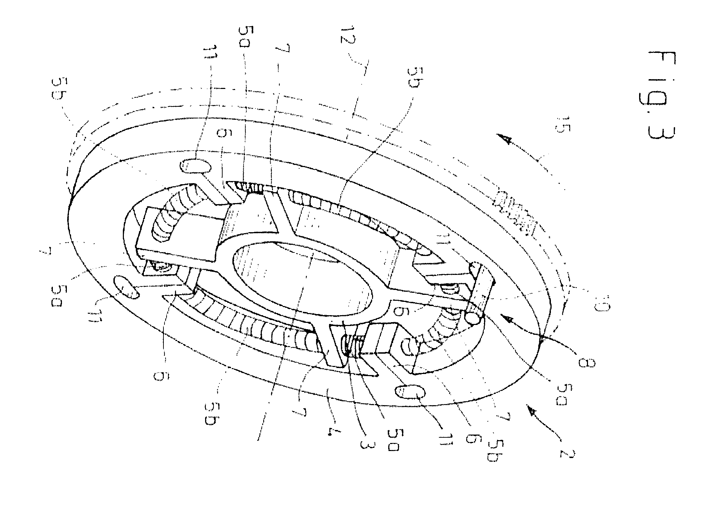

Figur 3 zeigt schematisch in einer perspektivischen Darstellung das Schwungrad 2 einer zweiten Ausführungsform der Brennkraftmaschine in einer Momentaufnahme, in der die Kurbelwelle 1 stillsteht und das zweite Schwungradsegment 4 mittels der ersten motorseitigen Arretierung 8 fixiert ist. Es sollen nur die Unterschiede zu der in den Figuren 1 und 2 dargestellten Ausführungsform erörtert werden, weshalb im übrigen bezug genommen wird auf die Figuren 1 und 2. Für dieselben Bauteile wurden dieselben Bezugszeichen verwendet.

Im Gegensatz zu der ersten Ausführungsform ist bei dem in Figur 3 dargestellten Schwungrad 2 die erste motorseitige Arretierung 8 mittels eines Stiftes 10 ausgebildet. Zur Fixierung des zweiten Schwungradsegmentes 4 wird dieser Stift 10 axial verschoben und in Eingriff gebracht mit in dem zweiten Schwungradsegment 4 angeordneten lochförmigen Ausnehmungen 11.

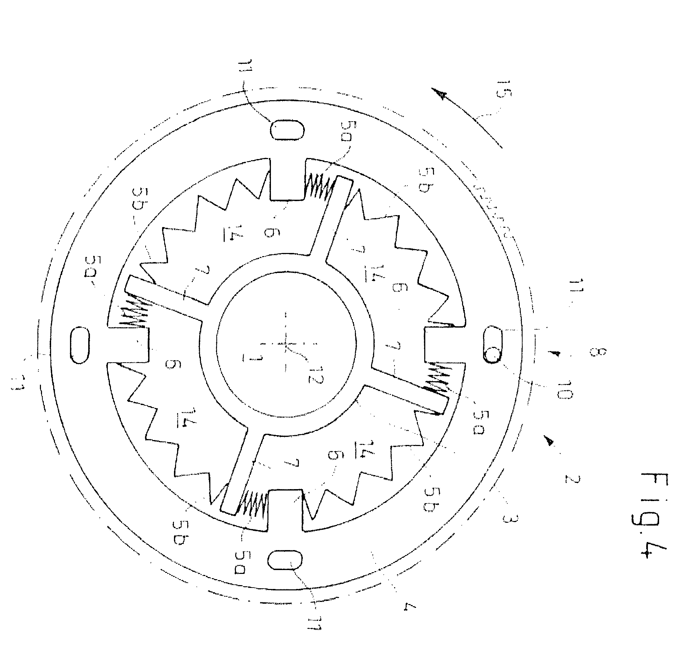

Figur 4 zeigt schematisch das in Figur 3 dargestellte Schwungrad 2 in einer Seitenansicht.

### Bezugszeichen

- 1: Kurbelwelle
- 2: Schwungrad
- 3: erstes Schwungradsegment
- 4: zweites Schwungradsegment
- 5a: Federelement
- 5b: Federelement
- 6: Nase
- 7: Flügel
- 8: Arretierung
- 9: Riegel
- 10: Stift
- 11: Ausnehmung
- 12: Längsachse der Kurbelwelle, Drehachse
- 13: freies Wellenende
- 14: Zwischenraum
- 15: Drehrichtung

## Patentansprüche

1. Verfahren zum kontrollierten Abstellen einer Brennkraftmaschine mit einer Kurbelwelle (1) und einem Schwungrad (2), das auf der Kurbelwelle (1) angeordnet ist und modular aus mindestens zwei Schwungradsegmenten (3,4) aufgebaut ist, wobei ein erstes Schwungradsegment (3) fest mit der Kurbelwelle (1) verbunden ist und dieses erste Schwungradsegment (3) mit einem zweiten Schwungradsegment (4) mindestens mittels eines Federelementes (5a, 5b) verbunden ist, so dass beide Schwungradsegmente (3, 4) unter Vorspannung des mindestens einen Federelementes (5a, 5b) gegeneinander um die Kurbelwellendrehachse (12) verdrehbar sind und das zweite Schwungradsegment (4) unter Zwischenschaltung dieses mindestens einen Federelementes (5a, 5b) mit der Kurbelwelle (1) verbunden ist, wobei zum kontrollierten Abstellen und Starten der Brennkraftmaschine das zweite Schwungradsegment (4) mittels einer ersten motorseitigen Arretierung (8) im wesentlichen drehfest fixierbar ist,
**dadurch gekennzeichnet, dass**
■ ausgehend vom Betrieb der Brennkraftmaschine, bei dem die mindestens zwei Schwungradsegmente (3,4) bei gelösten Arretierungen mit der Kurbelwelle (1) umlaufen, beim Abstellen der Brennkraftmaschine nach Abschalten der Zündung und/oder der Kraftstoffzufuhr das zweite Schwungradsegment (4) mittels der ersten Arretierung (8) drehfest fixiert wird, während die Kurbelwelle (1) mitsamt dem ersten Schwungradsegment (3) unter Vorspannung des mindestens einen Federelementes (5a, 5b) ausläuft, wodurch die Kurbelwelle (1) bis zu ihrem Stillstand verzögert wird.

2. Verfahren nach Anspruch 1,
**dadurch gekennzeichnet, dass**
■ die Fixierung des zweiten Schwungradsegmentes (4) in der Art vorgenommen wird, daß die nach Abschalten der Brennkraftmaschine bis zu ihrem Stillstand abgegebene kinetische Energie mittels Federelement (5a, 5b) kontrolliert in der Weise abgebaut wird, daß die Kurbelwelle (1) unter Vorspannung des mindestens einen Federelementes (5a, 5b) in einer vorbestimmbaren Position angehalten wird, und
■ das erste Schwungradsegment (3) mittels der zweiten Arretierung drehfest fixiert wird, wenn sich die Kurbelwelle (1) in der vorbestimmbaren Position befindet, wodurch die nach Abschalten der Brennkraftmaschine bis zum Stillstand der Kurbelwelle (1) abgegebene Energie zumindest teilweise in dem mindestens einen Federelement (5a, 5b) aufgenommen bzw. gespeichert wird.

3. Verfahren nach Anspruch 2,
**dadurch gekennzeichnet, dass**
■ ausgehend von einer Stopposition, in der das mindestens eine Federelement (5a, 5b) vorgespannt ist und in der die mindestens zwei Schwungradsegmente (3, 4) mittels der Arretierungen (8) fixiert sind,
■ zum Starten der Brennkraftmaschine das zweite Schwungradsegment (4) durch Lösen der ersten Arretierung (8) freigesetzt wird, wodurch das zweite Schwungradsegment (4) infolge des Entspannens des mindestens einen vorgespannten Federelementes (5a, 5b) beschleunigt wird, und
■ das erste Schwungradsegment (3) durch Lösen der zweiten Arretierung freigesetzt wird, nachdem das mindestens eine Federelement (5a, 5b) sich entspannt hat und erneut vorgespannt wird, wodurch die Kurbelwelle (1) mitsamt dem ersten Schwungradsegment (3) infolge eines Entspannens des mindestens einen vorgespannten Federelementes (5a, 5b) in Drehung versetzt wird.

4. Verfahren nach einem der Ansprüche 1 bis 3,
**dadurch gekennzeichnet, daß**
■ falls sich die Kurbelwelle (1) bei Stillstand nicht in einer Vorzugsposition befindet, die kinetische Energie des mindestens einen vorgespannten Federelementes (5a, 5b) dazu genutzt wird, die Kurbelwelle (1) in eine Vorzugsposition zu drehen, wozu die erste oder beide Arretierungen (8) gegebenenfalls mehrmals und in geeigneter Weise gelöst und fixiert werden.

5. Verfahren nach Anspruch 1,
**dadurch gekennzeichnet, daß**
■ die Fixierung des zweiten Schwungradsegmentes (4) in der Art vorgenommen wird, daß die nach Abschalten der Brennkraftmaschine bis zu ihrem Stillstand abgegebene kinetische Energie infolge Spannen und Entspannen des mindestens einen Federelements (5a, 5b) kontrolliert in der Weise abgebaut wird, daß die Kurbelwelle (1) in einer vorbestimmbaren Position, in der sich das mindestens eine Federelement (5a, 5b) in einer stabilen Position befindet, angehalten wird.

6. Verfahren nach Anspruch 5, **dadurch gekennzeichnet, daß**
■ ausgehend von einer Stopposition, in der sich das mindestens eine Federelement (5a, 5b) in einer stabilen Position befindet und in der das zweite Schwungradsegment (4) mittels der ersten Arretierungen (8) fixiert ist,
■ zum Starten der Brennkraftmaschine das zweite Schwungradsegment (4) durch Lösen der ersten Arretierung (8) freigesetzt wird, und
■ die Kurbelwelle (1) in Drehung versetzt wird.

7. Verfahren nach einem der Ansprüche 2 bis 6,
**dadurch gekennzeichnet, daß**
■ die vorbestimmbare Position eine Vorzugsposition ist und die Kurbelwelle (1) in dieser Vorzugsposition angehalten wird.

## Claims

1. Method for the controlled setting down of the internal combustion engine having a crankshaft (1) and a flywheel (2) which is arranged on the crankshaft (1) and is constructed in a modular fashion from at least two flywheel segments (3, 4), **characterized in that** a first flywheel segment (3) being fixedly connected to the crankshaft (1) and this first flywheel segment (3) being connected to a second flywheel segment (4) at least by means of a spring element (5a, 5b) so that both flywheel segments (3, 4) can be rotated with respect to one another about the rotational axis (12) of the crankshaft with prestressing of the at least one spring element (5a, 5b), and the second flywheel segment (4) is connected to the crankshaft (1) with intermediate connection of the at least one spring element (5a, 5b), in which case, in order to shut down and start the internal combustion engine in a controlled fashion the second flywheel segment (4) can be secured in an essentially rotationally fixed fashion by means of a first engine-mounted locking device (8), **characterized in that**
• starting from the operating mode of the internal combustion engine in which the at least two flywheel segments (3, 4) rotate with the crankshaft (1) with locking devices released, when the internal combustion engine has been shut down after the ignition and/or the fuel supply has been switched off the second flywheel segment (4) is secured in a rotationally fixed fashion by means of the first locking device (8) while the crankshaft (1) coasts together with the first flywheel segment (3) with prestressing of the at least one spring element (5a, 5b), as a result of which the crankshaft (1) is decelerated to its stationary state.

2. Method according to Claim 1, **characterized in that**
• the second flywheel segment (4) is secured in such a way that the kinetic energy which is emitted after the switching off of the internal combustion engine until it comes to a stationary state is reduced by means of a spring element (5a, 5b) in a controlled fashion such that the crankshaft (1) is stopped in a predeterminable position with prestressing of the at least one spring element (5a, 5b), and
• the first flywheel segment (3) is secured in a rotationally fixed fashion by means of the second locking device when the crankshaft (1) is in the predeterminable position, as a result of which the energy which is emitted after the switching off of the internal combustion engine until the crankshaft (1) comes to a stationary state is absorbed and/or stored at least partially in the at least one spring element (5a, 5b).

3. Method according to Claim 2, **characterized in that**
• starting from a stopped position in which the at least one spring element (5a, 5b) is prestressed and in which the at least two flywheel segments (3, 4) are secured by means of the locking devices (8),
• in order to start the internal combustion engine the second flywheel segment (4) is released as a result of the releasing of the first locking device (8), as a result of which the second flywheel segment (4) is accelerated due to the release of stress of the at least one prestressed spring element (5a, 5b), and
• the first flywheel segment (3) is released as a result of the releasing of the second locking device after the stress of the at least one spring element (5a, 5b) has been released and said spring element (5a, 5b) has been prestressed again, as a result of which the crankshaft (1) together with the first flywheel segment (3) is made to rotate due to a release of stress of the at least one prestressed spring element (5a, 5b).

4. Method according to one of Claims 1 to 3,
**characterized in that**
• if the crankshaft (1) is not in a preferred position when it is in a stationary state, the kinetic energy of the at least one prestressed spring element (5a, 5b) is used to rotate the crankshaft (1) into a preferred position, for which purpose the first locking device or the two locking devices (8) are, if appropriate, repeatedly released and secured in a suitable fashion.

5. Method according to Claim 1, **characterized in that**
• the second flywheel segment (4) is secured in such a way that the kinetic energy which is emitted after the switching off of the internal combustion engine until it comes to a stationary state is reduced in a controlled fashion, due to the stressing and release of stress of the at least one spring element (5a, 5b), such that the crankshaft (1) is stopped in a predeterminable position in which the at least one spring element (5a, 5b) is in a stable position.

6. Method according to Claim 5, **characterized in that**
• starting from a stopped position in which the at least one spring element (5a, 5b) is in a stable position and in which the second flywheel segment (4) is secured by means of the first locking devices (8),
• in order to start the internal combustion engine the second flywheel segment (4) is released as a result of the releasing of the first locking device (8), and
• the crankshaft (1) is made to rotate.

7. The method according to one of Claims 2 to 6,
**characterized in that**
the predeterminable position is a preferred position and the crankshaft (1) is stopped in this preferred position.

## Revendications

1. Procédé pour l'arrêt contrôlé d'un moteur à combustion interne comprenant un vilebrequin (1) et une roue volante (2), qui est disposée sur le vilebrequin (1) et qui est construite sous forme modulaire à partir de deux segments de roue volante (3, 4), un premier segment de roue volante (3) étant connecté fixement au vilebrequin (1) et ce premier segment de roue volante (3) étant connecté à un deuxième segment de roue volante (4) au moins au moyen d'un élément de ressort (5a, 5b), de sorte que les deux segments de roue volante (3, 4) puissent tourner l'un par rapport à l'autre autour de l'axe de rotation du vilebrequin (12) avec précontrainte de l'au moins un élément de ressort (5a, 5b), et le deuxième segment de roue volante (4) étant connecté au vilebrequin (1) en interposant cet au moins un élément de ressort (5a, 5b), le deuxième segment de roue volante (4) pouvant être fixé de manière essentiellement solidaire en rotation au moyen d'un premier blocage (8) côté moteur, pour l'arrêt et le démarrage contrôlés du moteur à combustion interne,
**caractérisé en ce que**
- à partir d'un fonctionnement du moteur à combustion interne dans lequel les au moins deux segments de roue volante (3, 4) tournent avec le vilebrequin (1) lorsque les blocages sont desserrés, lors de l'arrêt du moteur à combustion interne, après la coupure de l'allumage et/ou de l'alimentation en carburant, le deuxième segment de roue volante (4) est fixé de manière solidaire en rotation au moyen du premier blocage (8), tandis que le vilebrequin (1) continue de tourner jusqu'à l'arrêt conjointement avec le premier segment de roue volante (3) avec précontrainte de l'au moins un élément de ressort (5a, 5b), de sorte que le vilebrequin (1) soit ralenti jusqu'à son immobilisation.

2. Procédé selon la revendication 1,
**caractérisé en ce que**
- la fixation du deuxième segment de roue volante (4) est effectuée de telle sorte que l'énergie cinétique fournie après l'arrêt du moteur à combustion interne jusqu'à son immobilisation soit réduite de manière contrôlée au moyen de l'élément de ressort (5a, 5b) de telle sorte que le vilebrequin (1) soit arrêté dans une position prédéterminable avec précontrainte de l'au moins un élément de ressort (5a, 5b), et
- le premier segment de roue volante (3) est fixé au moyen du deuxième blocage de manière solidaire en rotation lorsque le vilebrequin (1) se trouve dans la position prédéterminable, de sorte que l'énergie fournie après l'arrêt du moteur à combustion interne jusqu'à l'immobilisation du vilebrequin (1) soit reçue ou stockée en partie dans l'au moins un élément de ressort (5a, 5b).

3. Procédé selon la revendication 2,
**caractérisé en ce que**
- à partir d'une position d'arrêt, dans laquelle l'au moins un élément de ressort (5a, 5b) est précontraint et dans laquelle les au moins deux éléments de roue volante (3, 4) sont fixés au moyen des blocages (8),
- pour le démarrage du moteur à combustion interne, le deuxième segment de roue volante (4) est libéré par desserrage du premier blocage (8), de sorte que le deuxième segment de roue volante (4) soit accéléré à la suite de la détente de l'au moins un élément de ressort précontraint (5a, 5b), et
- le premier élément de roue volante (3) est libéré par desserrage du deuxième blocage, après que l'au moins un élément de ressort (5a, 5b) se soit détendu et se soit à nouveau précontraint, de sorte que le vilebrequin (1) soit mis en rotation conjointement avec le premier segment de roue volante (3) suite à une détente de l'au moins un élément de ressort précontraint (5a, 5b).

4. Procédé selon l'une quelconque des revendications 1 à 3,
**caractérisé en ce que**
- si le vilebrequin (1) ne se trouve pas dans une position préférentielle lors de son immobilisation, l'énergie cinétique de l'au moins un élément de ressort précontraint (5a, 5b) est alors utilisée pour faire tourner le vilebrequin (1) dans une position préférentielle, et pour ce faire le premier ou les deux blocages (8) sont éventuellement libérés et fixés plusieurs fois de manière appropriée.

5. Procédé selon la revendication 1,
**caractérisé en ce que**
- la fixation du deuxième segment de roue volante (4) est effectuée de telle sorte que l'énergie cinétique fournie après l'arrêt du moteur à combustion interne jusqu'à son immobilisation soit réduite de manière contrôlée suite à la tension et à la détente de l'au moins un élément de ressort (5a, 5b), de telle sorte que le vilebrequin (1) soit arrêté dans une position prédéterminable, dans laquelle l'au moins un élément de ressort (5a, 5b) se trouve dans une position stable.

6. Procédé selon la revendication 5,
**caractérisé en ce que** :
- à partir d'une position d'arrêt, dans laquelle l'au moins un élément de ressort (5a, 5b) se trouve dans une position stable et dans laquelle le deuxième segment de roue volante (4) est fixé au moyen du premier blocage (8),
- pour le démarrage du moteur à combustion interne, le deuxième segment de roue volante (4) est libéré par desserrage du premier blocage (8), et
- le vilebrequin (1) est mis en rotation.

7. Procédé selon l'une quelconque des revendications 2 à 6,
**caractérisé en ce que**
- la position prédéterminable est une position préférentielle et le vilebrequin (1) est arrêté dans cette position préférentielle.
